# EUROPÄISCHE PATENTANMELDUNG

(11) **EP 0 786 669 A2**
(43) Veröffentlichungstag der Anmeldung: **30.07.1997**
(21) Anmeldenummer: 97100424.7
(22) Anmeldetag: 13.01.1997
(51) Int. Cl.: G01S 5/22

(54) **Verfahren zur Ortung von Körperschallereignissen bei zu überwachenden Druckumschliessungen in Kraftwerken**

(30) Priorität: 26.01.1996 DE 19602811
(71) Anmelder: SIEMENS AKTIENGESELLSCHAFT, 80333 München (DE)
(72) Erfinder: Tapia-Egoavil, Carlos, Dipl.-Ing. (FH), 91077 Kleinsendelbach (DE)

(57) **Zusammenfassung**

Ein Verfahren zur Ortung von Körperschallereignissen bei zu überwachenden Druckumschließungen in Kraftwerken gemäß dem Oberbegriff des Anspruchs 1 führt ein Hyperbelschnittverfahren für jeden Wert aus einem vorgebbaren Intervall von möglichen Geschwindigkeitswerten für die Ausbreitung einer durch ein Körperschallereignis ausgelösten Schallwelle durch und wählt als beste Ortung diejenige Ortsangabe aus, deren Fehler minimal ist. Dem Verfahren braucht keine diskrete Schallgeschwindigkeit zugeführt werden und es bestimmt den Ort eines Körperschallereignisses mit absolutem Fehlerminimum.

## Beschreibung

Die Erfindung bezieht sich auf ein Verfahren zur Ortung von Körperschallereignissen bei zu überwachenden Druckumschließungen in Kraftwerken, gemäß dem Oberbegriff des Patentanspruchs 1.

Während des Betriebs eines Kraftwerks, insbesondere eines Kernkraftwerks, entstehen Körperschallgeräusche, die von der Kühlmittelströmung, dem Drehklang der Pumpen, sowie von anderen in oder an der Druckumschließung angebrachten und zeitweise betätigten Komponenten, wie Ventile und Steuerelemente, herrühren und ein mehr oder weniger monotones Grundgeräusch verursachen. Darüber hinaus werden einzelne Körperschallereignisse erzeugt, wenn lose Teile auf die Wände der Druckumschließung, insbesondere des Reaktordruckbehälters, auftreffen oder lockere Teile anschlagen.

Eine schnelle und genaue Detektion loser oder lockerer Teile ist zur Früherkennung eines Schadens aber auch zur Vermeidung von Folgeschäden erforderlich, um letztlich den sicheren Betrieb einer Kraftwerksanlage gewährleisten zu können. Ein hierfür geeignetes Verfahren ist beispielsweise aus der Veröffentlichung 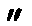 KÜS Körperschall-Überwachungssystem, Siemens Energieerzeugung, Bestell-Nr. A96001-U54-A251, Printed in Germany, August 1994M 154081 PA 08941" bekannt.

In bekannten Körperschallüberwachungssystemen werden zur Verarbeitung von Laufzeitunterschieden einer durch ein Körperschallereignis ausgelösten Schallwelle zu verschiedenen, auf einer Druckumschließung positionierten Sensoren numerische Iterationsverfahren, nämlich das Gradientenverfahren oder das Newton-Verfahren, angewandt. Diese Verfahren beginnen mit der Annahme eines Ortes für ein Körperschallereignis, der unter Minimierung der Fehler für die sich ergebenden Laufzeitunterschiede schrittweise verändert wird, bis entweder eine vorgebbare Toleranzschwelle für die Fehler erreicht ist oder bei Variation des Ortes die Fehler für die Laufzeitunterschiede wieder anwachsen.

Diese Verfahren leiden unter dem Nachteil, daß ihnen ein genauer Wert für die Schallgeschwindigkeit vorgegeben werden muß. Ein solcher Wert wird jedoch gerade im Bereich des Körperschalls stark durch Material, Temperatur und Modenart beeinflußt und ist daher für die Ausbreitung der Schallwelle eines einzelnen Körperschall-Ereignisses nicht genau bekannt.

Ein weiterer Nachteil besteht in einem frühzeitigen Abbruch dieser Verfahren, wenn für die Fehler in den Laufzeitunterschieden ein relatives Minimum erreicht ist. Dadurch entgeht diesen Verfahren ein unter Umständen vorhandenes absolutes Fehlerminimum, durch welches der Ort des Körperschallereignisses genauer lokalisiert worden wäre.

Der Erfindung liegt daher die Aufgabe zugrunde, ein Verfahren zur Ortung von Körperschallereignissen bei zu überwachenden Druckumschließungen in Kraftwerken bereitzustellen, dem nicht ein diskreter Wert für die Schallgeschwindigkeit zugeführt werden muß und das als beste Ortung eines Körperschallereignisses den Ort mit absolutem Fehlerminimum im Laufzeitunterschied ermittelt.

Die genannte Aufgabe wird gelöst mit den Merkmalen im kennzeichnenden Teil des Hauptanspruchs. Aufgrund der Durchführung des Ortungsverfahrens für alle Werte, die ein Intervall von möglichen Schallgeschwindigkeiten für die Ausbreitung der durch ein Körperschallereignis ausgelösten Schallwelle kennzeichnen, entfällt die Einschränkung auf einen diskreten Geschwindigkeitswert. Eine gesonderte Durchführung des Hyperbelschnittverfahrens mit Ausgabe einer Ortsangabe für das Körperschallereignis und deren Fehler für jeden Geschwindigkeitswert des Intervalls gestattet durch einen Fehlervergleich aller Ergebnisse als beste Ortung diejenige mit dem absolut kleinsten Fehler auszuwählen, wobei man als Nebenergebnis des Verfahrens die Schallgeschwindigkeit erhält, die zur Ortung mit dem kleinsten Fehler gehört.

In einer bevorzugten Ausführungsform der Erfindung verarbeitet das Hyperbelschnittverfahren für einen festgehaltenen Geschwindigkeitswert Laufzeitunterschiede von vier Sensoren, wobei zunächst mit den Laufzeitunterschieden von drei der vier Sensoren Ortungen durchgeführt werden, aus welchen jeweils ein theoretischer Laufzeitunterschied zum vierten Sensor bestimmt und mit dem tatsächlich aufgenommenen Laufzeitunterschied zum vierten Sensor verglichen wird. Als Ergebnis wird diejenige Ortsangabe mit der kleinsten Abweichung im Laufzeitunterschied zum vierten Sensor zusammen mit dem dieser Abweichung entsprechenden Fehler in der Ortsabgabe zwischengespeichert. Dadurch erreicht man eine vollständige Ortung mit einer möglichst kleinen Anzahl von Sensoren.

In einer vorteilhaften Ausführungsform der Erfindung werden mit den Laufzeitunterschieden von drei Sensoren auf der als Abwicklung in eine Ebene abgebildeten Oberfläche einer Druckumschließung Ortungen einerseits für die realen Positionen dieser Sensoren und andererseits für virtuell verschobene Positionen dieser Sensoren durchgeführt. Durch die virtuelle Verschiebung von Sensorpositionen werden auch diejenigen Punkte der Oberfläche einer Druckumschließung als mögliche Orte eines Körperschallereignisses erfaßt, deren kürzeste, entlang der Druckumschließung verlaufende Verbindung zu einem Sensor durch die Abwicklung unterbrochen wird. Somit kann auf den einfachen Formalismus einer Planarortung auch bei komplizierteren geometrischen Oberflächenformen der Druckumschließung zurückgegriffen werden.

Zur weiteren Erläuterung der Erfindung wird auf ein Ausführungsbeispiel in der Zeichnung verwiesen, in deren
- FIG 1: ein erfindungsgemäßes Verfahren durch ein Struktogramm und in den
- FIG 2: eine Abwicklung der Oberfläche einer zylinderförmigen Druckumschließung mit realen (A) und virtuell verschobenen (B,C,D) Positionen von drei Sensoren veranschaulicht ist.

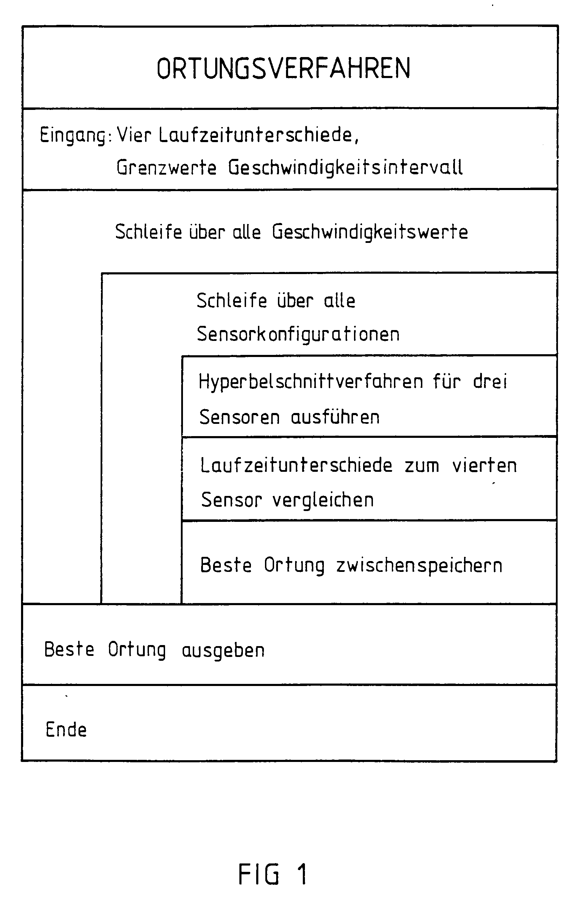

Gemäß FIG 1 werden bei einem erfindungsgemäßen Ortungsverfahren Laufzeitunterschiede einer vom Ort eines Körperschallereignisses ausgehenden Schallwelle zu je zwei von vier auf der Oberfläche einer Druckumschließung positionierten Sensoren sowie Grenzwerte für ein Intervall von Geschwindigkeitswerten erfaßt. Sodann wird eine Schleife über Geschwindigkeitswerte ausgeführt, die das vorgegebene Intervall kennzeichnen. Innerhalb dieser Schleife wird für eine festgehaltene Geschwindigkeit eine Schleife über alle Konfigurationen von drei der vier Sensoren, das sind die realen sowie virtuell verschobene Positionen dieser drei Sensoren, ausführt. Dabei wird für jede Konfiguration zunächst eine Ortung nach dem Hyperbelschnittverfahren, dann ein Vergleich von dem daraus theoretisch zu erwartenden mit dem tatsächlich aufgenommenen Laufzeitunterschied zum vierten Sensor und schließlich eine Zwischenspeicherung der Ortung mit dem kleinsten Fehler durchgeführt. Nach Durchlaufen aller Geschwindigkeitswerte und aller Sensorkonfigurationen endet das Verfahren mit der Ausgabe der Ortung, die mit dem absolut kleinsten Fehler behaftet ist.

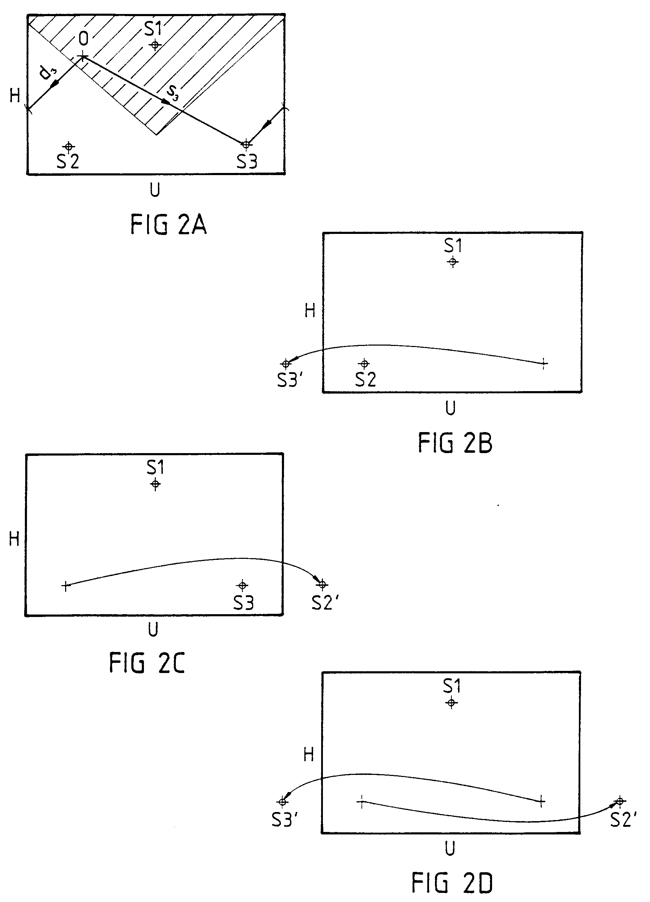

Nach FIG 2 ergibt sich als Abwicklung der zylindrischen Oberfläche einer Druckumschließung, etwa eines Reaktordruckbehälters, ein Rechteck, dessen Höhe der Höhe H des Zylinders und dessen Breite dem Umfang U des Zylinders entspricht. In FIG 2A ist ein Beispiel für reale Positionen von drei Sensoren S1, S2 und S3 eingetragen. Unter der Annahme, daß Sensor S1 als erster das Signal der Schallwelle eines Körperschallereignisses aufgenommen hat, markiert die schraffierte Fläche den Bereich, in dem das Körperschallereignis stattgefunden haben kann. Ist beispielsweise das Ereignis am Ort O aufgetreten, dessen Verbindung s₃ zum Sensor S3 innerhalb der Abwicklung nicht der kürzesten Entfernung d₃ zum Sensor S3 auf der Zylindermantelfläche entspricht, so würde das Hyperbelschnittverfahren mit den gemessenen Laufzeitunterschieden einen vom Orte O abweichenden Ort ermitteln. Eine korrekte Ortung erhält man durch eine virtuelle Verschiebung der Position des Sensors S3 um einen Zylinderumfang auf die Position S3' gemäß FIG 2B. Analog werden Ortungen mit verschobenen Sensorpositionen S2' gemäß FIG 2C sowie S2' und S3' gemäß FIG 2D durchgeführt, um alle Punkte der Oberfläche als mögliche Orte von Körperschallereignissen zu erfassen.

## Patentansprüche

1. Verfahren zur Ortung von Körperschallereignissen bei zu überwachenden Druckumschließungen in Kraftwerken, wobei an unterschiedlichen Stellen auf der Druckumschließung positionierte Sensoren jeweils bei Ankunft einer durch ein Körperschallereignis ausgelösten und sich entlang der Druckumschließung ausbreitenden Schallwelle Signale aufnehmen, die in nachgeschalteten Aufzeichnungsgeräten gespeichert werden, worauf aus sich durch unterschiedliche Ankunftszeiten der Schallwelle an je zwei voneinander verschiedenen Sensoren ergebenden Laufzeitunterschieden mittels eines Hyperbelschnittverfahrens der Ort des Körperschallereignisses bestimmt wird,
**dadurch gekennzeichnet**, daß je einem Körperschallereignis ein Intervall von möglichen Geschwindigkeitswerten für die Ausbreitung der ausgelösten Schallwelle zugrunde gelegt wird, wobei das Hyperbelschnittverfahren für jeden Geschwindigkeitswert dieses Intervalls gesondert durchgeführt wird und als Ergebnis eine Ortsangabe mit Fehler ausgibt, aus welchen als beste Ortung des Körperschallereignisses diejenige mit dem kleinsten Fehler ausgewählt wird.

2. Verfahren nach Anspruch 1,
**dadurch gekennzeichnet**, daß mit dem Hyperbelschnittverfahren für einen festgehaltenen Geschwindigkeitswert Laufzeitunterschiede von vier Sensoren verarbeitet werden, wobei zunächst mit den Laufzeitunterschieden von drei der vier Sensoren Ortungen durchgeführt werden, aus welchen jeweils ein theoretischer Laufzeitunterschied zum vierten Sensor bestimmt und mit dem tatsächlich aufgenommenen Laufzeitunterschied zum vierten Sensor verglichen wird, und als Ergebnis diejenige Ortsangabe mit der kleinsten Abweichung im Laufzeitunterschied zum vierten Sensor zusammen mit dem dieser Abweichung entsprechenden Fehler in der Ortsangabe ausgegeben wird.

3. Verfahren nach Anspruch 1 oder 2,
**dadurch gekennzeichnet**, daß mit den Laufzeitunterschieden von drei Sensoren auf der als Abwicklung in eine Ebene abgebildeten Oberfläche einer Druckumschließung Ortungen einerseits für die realen Positionen dieser Sensoren und andererseits für virtuell verschobene Positionen dieser Sensoren durchgeführt werden, wobei durch die virtuelle Verschiebung von Sensorpositionen auch diejenigen Punkte der Oberfläche einer Druckumschließung als mögliche Orte eines Körperschallereignisses erfaßt werden, deren kürzeste, entlang der Druckumschließung verlaufende Verbindung zu einem Sensor, durch die Abwicklung unterbrochen werden.
